(19) Europäisches Patentamt / European Patent Office / Office européen des brevets

(11) **EP 3 023 823 B1**

(12) **EUROPEAN PATENT SPECIFICATION**

(45) Date of publication and mention
of the grant of the patent:
**03.07.2019   Bulletin 2019/27**

(51) Int Cl.:
*G02B 6/02* *(2006.01)*        *G02B 6/44* *(2006.01)*

(21) Application number: **15195131.6**

(22) Date of filing: **18.11.2015**

(54) **MULTITUBE SEISMIC CABLE**

MULTITUBULARES SEISMISCHES KABEL

CÂBLE SISMIQUE MULTITUBULAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.11.2014   IN 3686MU2014**

(43) Date of publication of application:
**25.05.2016   Bulletin 2016/21**

(73) Proprietor: **Sterlite Technologies Ltd
Maharashtra 431 136 (IN)**

(72) Inventors:
• **KUMAR, Sravan
  500039 Telangana (IN)**
• **COPPIN, Phill
  Denbigh LL16 4BW (GB)**
• **SAHOO, Kishore
  Haveli (IN)**
• **SRIVASTAVA, Shivam
  Madhya Pradesh (IN)**
• **TENZING, Kangbang Singh
  Pin No. 795001 Manipur (IN)**

(74) Representative: **Browne, Robin Forsythe et al
Hepworth Browne
15 St Paul's Street
Leeds LS1 2JG (GB)**

(56) References cited:
**JP-A- 2014 132 741        US-A1- 2009 087 154
US-A1- 2010 158 457        US-A1- 2011 293 228
US-B1- 7 382 955**

**Description**

TECHNICAL FIELD

The present disclosure relates generally to optical fiber cables and more specifically, to optical fiber cables which are robust and suitable for underground natural resource exploration applications.

BACKGROUND

Optical fiber cables are backbone of modern communication infrastructure and systems. The reliance on optical fibers and optical fiber cables for telecommunications, broadband communication, communication over passive optical networks, sensor applications, medicinal and surgical applications and the like is growing day by day. Generally, optical fibers and cables have been used as sensors for monitoring seismic and other underground field exploration parameters in the field of underground natural resource explorations. Also, the optical fiber cables are coupled with sensors to enable optical transmission of sensor signals in another application in the same field.

A conventional optical fiber cable for application in the field of oil and gas exploration typically includes multiple buffer tubes which are wound around a central strength member. The central strength member provides strength and integrity to the optical fiber cable. The buffer tubes include one or more optical fibers. In addition, available free space within each buffer tube permits free lateral movement of optical fibers up to a certain extent. Moreover, the buffer tubes may include a gel-filling if required. The gel-filling inside the buffer tubes blocks moisture and may facilitate smooth movement of optical fibers within the available free space of respective buffer tubes. These buffer tubes along with the central strength member are surrounded by an outer jacket to protect them (and optical fibers included in them) from wear and tear, crushing forces, heat, shock and the like.

US 7382955 discloses an optional fibre cable, including a plurality of loose tubes, each containing at least one optical fibre. US2010/0158457 discloses fiber optic cable that includes a multiplicity of optical fibers, where each optical fiber is substantially surrounded by a protective coating, and the optical fibers are generally surrounded by a matrix. A tape substantially surrounds the matrix, and a tube substantially surrounds the tape. A strength member is generally around the tube, and an outer jacket substantially surrounds the strength member.

US 2011/0293228 discloses a fiber optic cable that includes a fiber optic cable having a plurality of helically wound aramid yarns around an optical fiber and a jacket placed over the aramid yarns. The aramid yarns are divided into an inner aramid layer and an outer aramid layer. A harrier layer and a polymer barrier layer are introduced between the jacket and the aramid layer.

US 2009/0087154 discloses an optical fiber cable that includes twelve optical fibers encased and embedded in a soft acrylate matrix. Surrounding and encasing the soft acrylate matrix is a relatively hard acrylate encasement layer. The optical fiber buffer encasement is encased with a wrap of reinforcing yarn. An outer flame-retardant polymer jacket is formed around the buffer encasement and the reinforcing yarn.

JP-A-2014/132741 discloses a distributed antenna system including an optical cable in a buffer tube with sheath layers surrounding the fibre on it.

Going further, presently available optical fiber cables have some inconsistencies which make them unsuitable for delivering efficient, reliable and durable performance under testing terrains and extreme temperature conditions. For example, conventional optical fiber cables for outdoor applications use an outer jacket made of Polyethylene which offers resistance against mechanical and thermal shocks, but fails to offer reasonable flexibility to the cable. In difficult terrains, lack of sufficient flexibility may lead to permanent damage to the cable or may lead to induced stresses in the optical fibers included within the cable. This results in macro bending losses and transmission losses over long distances. In addition, conventional optical fiber cables for outdoor applications lack sufficient resistance against kinking. As an example, in most optical fiber cables for outdoor applications, the value of kinking radius is provided by formula $15 \times D$. '$D$' being diameter of the cable. However, for applications in the field of natural resource explorations, it is desired that the value of kink radius of the cable be lowered.

Furthermore, some applications of an optical fiber cable deployed in the field of underground natural resource explorations requires optical fiber/s to be connected to sensors placed in sensor tray/s. It is necessary that free movement of optical fibers within buffer tubes of a deployed cable be restricted for receiving accurate sensor signals. The conventional optical fiber cables are prone to transmit inaccurate or attenuated readings. Furthermore, the reliable deployment of optical fiber cables within sensor tray/s without kinking remains a challenge due to lack of flexibility of the buffer tubes.

Also, majority of the conventional optical fiber cables are not necessarily equipped with provisions for delivering reliable performance at extreme temperature conditions. In addition, the majority of the conventional optical fiber cables may not perform reliably on a broad range of temperature. The above cited drawbacks of conventional optical fiber cables make these cables unsuitable for applications in the field of underground natural resource explorations such as oil and gas explorations. Furthermore, re-deployment of same optical fiber cable at different sites is a necessary requirement in the field of underground natural resource explorations.

In light of the above discussion, there is a need for a robust, reliable and durable optical fiber cable that overcomes the above stated drawbacks. Further, the optical fiber cable should be suitable for redeployment at different locations in the field of underground natural resource explorations, such as oil and gas explorations.

SUMMARY

The present invention concerns an optical fiber cable according to claim 1.

The present disclosure seeks to provide an optical fiber cable suitable for redeployment for underground natural resource exploration. In one aspect, an embodiment of the present disclosure provides an optical fiber cable. An optical fiber cable comprising:

    a strength member substantially symmetrical along a longitudinal axis of said optical fiber cable, wherein said strength member is made of a composite material made of a polymer matrix and wherein said strength member is centrally located;
    a plurality of fiber units being laid around said strength member in a helical pattern, wherein each of said plurality of fiber units comprises:

        one or more optical fibers;
        a first covering layer; and
        a second covering layer,
        wherein said first covering layer is enclosed by said second covering layer, wherein each of said one or more optical fibers is enclosed by said first covering layer, wherein said second covering layer is made of a thermoplastic material and said first covering layer is made of an acrylic material, wherein a coefficient of thermal expansion of said thermoplastic material is less than $2.0 \times 10^{-4}$ /°C; and

    an outer jacket surrounding said plurality of fiber units, wherein said outer jacket further comprises:

        a second outer jacket layer; and
        a first outer jacket layer,
        wherein said second outer jacket layer is made of thermoplastic polyurethane and said first outer jacket layer is made of aramid yarns and wherein said second outer jacket layer surrounds said first outer jacket layer, and
        the plurality of fiber units further comprises a gel, wherein the gel on the first covering layer encloses each of the one or more optical fibers.

Embodiments of the present disclosure substantially eliminate or at least partially address the aforementioned problems in the prior art, and provides an optical fiber cable which is robust, flexible, reliable and durable and has an improved crush resistance and kink resistance.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present invention as defined by the appended claims.

BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

    FIG. 1A illustrates a perspective view of an optical fiber cable; in accordance with an embodiment of the present disclosure;
    FIG. 1B illustrates a cross-sectional view of the optical fiber cable of FIG. 1A; in accordance with an embodiment of the present disclosure;
    FIG. 2A illustrates a perspetive view of the optical fiber cable, in accordance with another embodiment of the present disclosure;
    FIG. 2B illustrates a cross-sectional view of the optical fiber cableof FIG. 2A, in accordance with another embodiment of the present disclosure; and
    FIG. 3 illustrates a cross-sectional view of the optical fiber cable, in accordance with yet another embodiment of the present disclosure; and

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present

The present disclosure provides an optical fiber cable. The optical fiber cable includes a strength member. The strength member lies substantially symmetrical along a longitudinal axis of the optical fiber cable. In addition, the optical fiber cable includes a plurality of fiber units. Each of the plurality of fiber units is laid around the strength member in a helical pattern. Moreover, the optical fiber cable includes an outer jacket. Further, the outer jacket surrounds the plurality of fiber units. The strength member is made of a composite material made of a polymer matrix. The strength member is centrally located. Each of the plurality of fiber units includes one or more optical fibers, a first covering layer and a second covering layer. The first covering layer is enclosed by the second covering layer. In addition, each of the one or more optical fibers is enclosed by the first covering layer. The second covering layer is made of a thermoplastic material and the first covering layer is made of an acrylic material. Further, a coefficient of thermal expansion of the thermoplastic material is less than $2.0 \times 10^{-4}$ /°C. Furthermore, the outer jacket includes a second outer jacket layer and a first outer jacket layer. The second outer jacket layer is made of thermoplastic polyurethane and the first outer jacket layer is made of aramid yarns. The second outer jacket layer surrounds the first outer jacket layer.

According to an embodiment, the optical fiber cable, the outer jacket includes the first outer jacket layer, the second outer jacket layer and a third outer jacket layer. The second outer jacket layer is made of thermoplastic polyurethane, the first outer jacket layer is made of aramid yarns and the third outer jacket layer is made of 85A polyether type thermoplastic polyurethane. In addition, the second outer jacket layer surrounds the first outer jacket layer, the first outer jacket layer surrounds the third outer jacket layer and the third outer jacket layer surrounds the plurality of fiber units.

Each of the plurality of fiber units includes the one or more optical fibers, the first covering layer, the second covering layer and a gel. The first covering layer is enclosed by the second covering layer. In addition, the first covering layer encloses the gel. The second covering layer is made of a thermoplastic material and the first covering layer is made of an acrylic material. Further, a coefficient of thermal expansion of the thermoplastic material is less than $2.0 \times 10^{-4}$ /°C.

According to an embodiment, the optical fiber cable is suitable for use in a field of underground natural resource explorations. The underground natural resource explorations include gas exploration, oil exploration and the like. Moreover, the optical fiber cable can be operationally coupled with one or more sensor arrays to sense and/or monitor various underground operational parameters. The underground operational parameters pertain to the oil and gas explorations. Further, the optical fiber cable may be referred to as seismic sensor array optical fiber cable. Furthermore, the optical fiber cable may simply be used to transmit optical signals (which may carry sensor data or communication data) to a receiver from the site of oil and gas explorations.

The strength member is made of a composite material made of a polymer matrix. The strength member is centrally located. The composite material is flexible fiber reinforced plastic. The fiber reinforced plastic is a composite material made of a polymer matrix reinforced with glass fibers. Examples of the fiber reinforced plastic include glass fiber, carbon fiber, aramid fiber, basalt fiber and the like. Moreover, the strength member provides physical strength to the optical fiber cable and resists over bending of the optical fiber cable.

Each of the plurality of fiber units is laid around the strength member in a helical pattern. Also, a cross section of each of the plurality of fiber units is cylindrical in shape. In addition, a packing density of each of the plurality of fiber units is greater than 90%.

According to an embodiment, each of the one or more optical fibers is a colored ink coated optical fiber. An outer diameter of each of the one or more optical fibers is less than 262 microns. In an embodiment of the present disclosure, each of the plurality of fiber units includes twelve optical fibers. In an embodiment of the present disclosure, total number of the optical fibers within the optical fiber cable is $(12 \times 5) = 60$.

According to an embodiment, each of the one or more optical fibers is selected from a group consisting of ITU-T G.652B optical fiber, ITU-T G.652D optical fiber, ITU-T G.657A1 optical fiber and ITU-T G.657A2 optical fiber. Moreover, each of the one or more optical fibers is selected from a group consisting of ITU-T G.657B2 optical fiber, ITU-T G.657B3 optical fiber and ITU-T G.655C optical fiber. Further, each of the one or more optical fibers is selected from a group consisting of ITU-T G.655D optical fiber and ITU-T G.655E optical fiber.

According to an embodiment, each of the one or more optical fibers is a single mode optical fiber. In another embodiment of the present disclosure, each of the one or more optical fibers is a multimode optical fiber.

According to an embodiment, each of the one or more optical fibers is a silica optical fiber with polymer coatings. In another embodiment, each of the one or more optical fibers is a glass fiber with polymer coatings. Each of the plurality of fiber units is similar in structure and dimensions. Also, each of the one or more optical fibers has similar shape, structure, dimensions and optical characteristics.

The second covering layer is made of a thermoplastic material. The thermoplastic material is a material which becomes soft when heated and hard when cooled. Furthermore, a coefficient of thermal expansion of the thermoplastic material is less than $2.0 \times 10^{-4}$/°C. The thermal expansion is a tendency of the thermoplastic material to change in shape, area and/or volume in response to a change in temperature. Also, the thermoplastic material is selected from a group. The group consists of polypropylene and nylon. In addition, polypropylene exhibits low shrinkage and provides low thickness layers.

According to an embodiment, the first covering layer is made of polymethyl methacrylate (an acrylic material).The polymethyl methacrylate is a transparent and rigid plastic made from polymerization of methyl methacrylate. Accordingly, the second covering layer and the first covering layer collectively form each of the plurality of fiber units. Moreover, the second covering layer and the first covering layer are not foamed due to whicheach of the plurality of fiber units achieve better robustness and kink resistance. In an embodiment of the present disclosure, the second covering layer and the first covering layer ensure better kink resistance.

The second outer jacket layer is made of thermoplastic polyurethane and the firstouter jacket layer is made of aramid yarns. The aramid yarns are high-performance fibers with molecules that are characterized by relatively rigid polymer chains. Also, thermoplastic polyurethane is a class of polyurethane plastics which consists of linear segmented block copolymers composed of soft and hard segments. In addition, the second outer jacket layer provides protection and enhances flexibility of the optical fiber cable.

In an example, the optical fiber cable possesses a length of 1 kilometer. In an example, the material used for the second outer jacket layer is thermoplastic urethane (TPU). Further, the outer diameter of the second outer jacket layer is 7.4 mm $\pm$ 0.3 mm. Furthermore, the material used for the first outer jacket layer is aramid yarns.In addition, the material used for the second covering layer is polypropylene. Moreover, the thickness of the second covering layer is 0.225 mm $\pm$ 0.05 mm and the outer diameter of the second covering layer is 1.8 mm $\pm$ 0.05 mm. Further, the material used for the first covering layer is polymethyl methacrylate and the thickness of the first covering layer is 0.2 mm $\pm$ 0.05 mm. Going further, the material used for the central core is fiber reinforced plastic and the outer diameter of the central core is 1.2 mm $\pm$ 0.05 mm. In addition, the material used for each of the one or more optical fibers is silica optical fiber coated with polymer coatings and the outer diameter of each of the one or more optical fibers is 250 $\mu$m.

According to an embodiment, the thickness of the second outer jacket layer is 1.1 mm $\pm$ 0.2 mm. In another embodiment, the thickness of the second outer jacket layer is 0.7 mm $\pm$ 0.2 mm.

According to an embodiment, the thickness of the first outer jacket layeris 0.4 mm. In another embodiment,the thickness of the first outer jacket layer is 0.4 mm$\pm$ 0.1 mm.

According to an embodiment, the thickness of the third outer jacket layer is 0.4 mm $\pm$ 0.1 mm.

According to an embodiment, one or more tests correspond to performance are performed on the optical fiber cable. The one or more tests include standard repeated bending test, crush test and kink resistance test. Each of the one or more tests includes one or more conditions for acceptance of the optical fiber cable to be declared as a quality product. The quality is based on change in attenuation, physical damage and kinking.The first test performed on the optical fiber cable is the standard repeated bending test. The standard repeated bending test is performed in accordance with a standard test procedure laid by IEC 60794-1-2-E6. Moreover, the standard repeated bending test is performed at 23°C with one or more specification details. The one or more specification details include a bending radius of 37.5 millimetres, number of turns equal to 10, number of cycles equal to 10000 and mass of the weight equal to 5 Kilograms. Moreover, the one or more conditions for acceptance include the change of attenuation to be less than 0.05 decibel, no physical damage undergone by optical fiber cable and no kink should occur on the optical fiber cable.

Further, the standard repeated bending test is performed on the optical fiber cable. The change in attenuation is 0.015 decibel is less than 0.05 decibel. Also, no physical damage and kinking occurred on the optical fiber cable. Further, the optical fiber cable passes the standard repeated bending test in accordance with the standard test procedure laid by IEC 60794-1-2-E6.

Going further, the second test performed on the optical fiber cable is the crush test. The crush test is performed in accordance with a standard test procedure laid by IEC 60794-1-2-E3. Moreover, the standard repeated bending test is performed at 23°C with no rotation of the optical fiber cable and one or more specification details. The one or more specification details include a total applied force of 2000 Newton, duration of application of the force is 60 seconds, number of tests equal to 5 and spacing between test places is 100 millimeter. Moreover, the one or more conditions for acceptance for the crush test include the change of attenuation to be less than 0.05 decibel, no physical damage undergone by optical fiber cable and no kink occur on the optical fiber cable.

Further, the crush test is performed on the optical fiber cable and the change in attenuation is 0.013 dB which is less than 0.05 dB. Also, no physical damage and kinking occurred on the optical fiber cable. Further, the optical fiber cable passes the crush test in accordance with the standard test procedure laid by IEC 60794-1-2-E3.

Going further, the third test performed on the optical fiber cable is the kink resistance test. Moreover, the kink resistance test involves wounding the optical fiber cable on a mandrel of 25 millimeter. Moreover, the one or more conditions for acceptance for the kink resistance test include that no kink should occur on the optical fiber cable. Further, the crush test is performed on the optical fiber cable and no kink occurred on the optical fiber cable. Further, the optical fiber cable passes the kink resistance test and has substantial kink resistance.

According to an embodiment, the one or more optical fibers may be selected from various categories of optical fibers. The various categories include multi-core optical fibers, multi-mode optical fibers, plastic/polymer optical fibers, nano-structured optical fibers and specialty optical fibers. In another embodiment, the optical fiber cable have colored optical fibers in the plurality of fiber units. According to an embodiment, the optical fiber cable have holey or photonic crystal optical fibers in the plurality of fiber units.

According to an embodiment, the number of fiber units inside the optical fiber cable may vary. In another embodiment, the number of optical fibers in the plurality of fiber units may vary. In an embodiment of the present disclosure, a packing of the one or more optical fibers within the plurality of fiber units reduces free movement of the one or more optical fibers.

According to an embodiment, the packing density within cross-section of a fiber unit of the plurality of fiber units is defined as a ratio of A1/A2. In addition, A1 represents diameter (in millimeters) of a circle of smallest area within which cross-sections of each of the one or more optical fibers. Mathematically, A1can be calculated as follows:

$$A1 = (1.155) \times (d) \times \sqrt{n}$$

where:

'd' is diameter (in millimeters) of an optical fiber included in the fiber unit

'n' represents total count of optical fibers contained within the fiber unit.

A2represents inner diameter (in millimeters) of the second covering layer of the fiber unit.

According to an embodiment, the first outer jacket layer of the outer jacket of the optical fiber cable further includes two sub-layers of aramid yarns. The sub-layers include a first sub-layer and a second sub-layer. The first sub-layer includes aramid yarns wound around the third outer jacket layer of the outer jacket in a clockwise direction. The second sub-layer includes aramid yarns wound around the first sub-layer in anticlockwise direction (i.e. in a direction which is reverse of the direction of winding of the first sub-layer). Moreover, provision of two layers of aramid yarns wound in clockwise and anticlockwise manner enhances robustness of the optical fiber cable against twisting. Also, presence of feature of robustness against twisting makes the optical fiber cable suited for redeployment.

According to an embodiment, the strength member of the optical fiber cable has a hollow tubular structure. In another embodiment, the strength member is in the form of a hollow fiber reinforced plastic tube. In an embodiment, the plurality of fiber units is wound over the strength member in reverse oscillation manner. The manner in which the direction of helical winding of the plurality of fiber units is reversed after fixed spans of cable length.

According to an embodiment, the one or more binding threads may be wound over the assembly of the plurality of fiber units to keep them in place around the strength member. The one or more binding threads is utilized to maintain compaction and keep the plurality of fiber units in place over the strength member.

## DETAILED DESCRIPTION

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

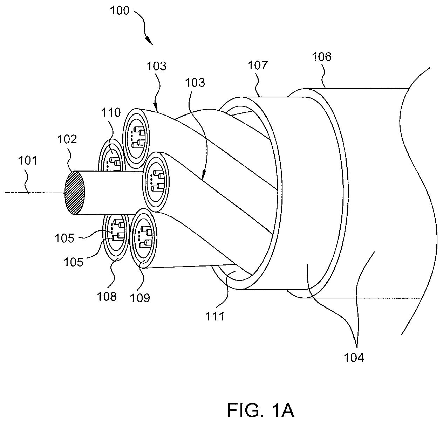

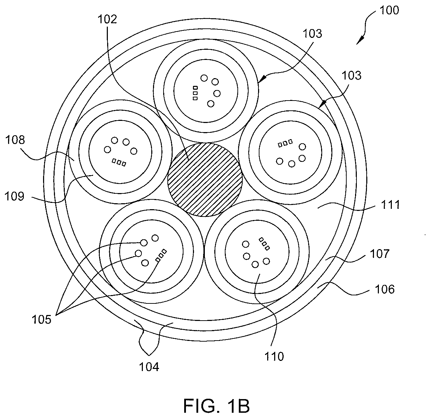

Referring now to the drawings, particularly by their reference numbers, **FIG. 1A** illustrates a perspective view of an optical fiber cable **100**, in accordance with an embodiment of the present disclosure. The optical fiber cable **100** includes a strength member **102**, a plurality of fiber units **103** and an outer jacket **104**. In addition, the strength member **102** has a circular cross-section (as illustrated in a cross sectional view of the optical fiber cable **100** in **FIG. 1B**) and lies substantially symmetrical around a longitudinal axis **101**. The strength member **102** is made of a composite material made of a polymer matrix. Further, each of the plurality of fiber units **103** includes one or more optical fibers **105**, a second covering layer **108** and a first covering layer **109**. The first covering layer **109** is enclosed by the second covering layer **108**. The second covering layer **108** is made of a thermoplastic material and the first covering layer **109** is made of an acrylic material. Moreover, a coefficient of thermal expansion of the thermoplastic material is less than $2.0 \times 10^{-4}$ /°C. Also, the first covering layer **108** of each of the plurality of fiber units **103** directly surrounds a void **110**. Furthermore, the outer jacket **104** surrounds each of the plurality of fiber units **103** (also illustrated in the cross sectional view of the optical fiber cable **100** in the **FIG. 1B**). The outer jacket **104** includes a second outer jacket layer **106** and a first outer jacket layer **107**. Also, the second outer jacket layer **106** surrounds the first outer jacket layer **107**. The second outer jacket layer **106** is made of thermoplastic polyurethane and the first outer jacket layer **107** is made of aramid yarns. In addition, a void **111** represents an unoccupied free space of the optical fiber cable **100** surrounded by the outer jacket **104**.

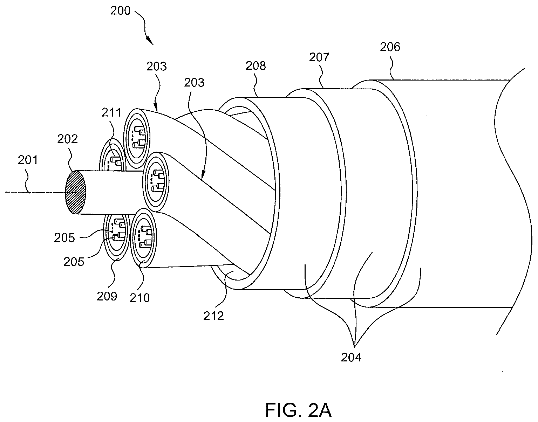

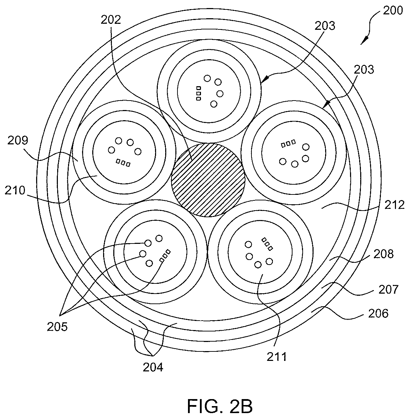

**FIG. 2A** illustrates a perspective view of an optical fiber cable **200**, in accordance with another embodiment of the present disclosure. The optical fiber cable **100** includes a strength member **202**, a plurality of fiber units **203** and an outer jacket **204**. In addition, the strength member **202** has a circular cross-section (as illustrated in a cross sectional view of the optical fiber cable **200** in **FIG. 2B**) and lies substantially symmetrical around a longitudinal axis **201**. The strength member **202** is made of a composite material made of a polymer matrix. Further, each of the plurality of fiber units **203** includes one or more optical fibers **205**, a second covering layer **209** and a first covering layer **210**. The second covering layer **209** is made of a thermoplastic material and the first covering layer **210** is made of an acrylic material. Also, the first covering layer **210** of each of the plurality of fiber units **203** directly surrounds a void **211**. Furthermore, the outer jacket **204** surrounds each of the plurality of fiber units **203** (also illustrated in the cross sectional view of the optical fiber cable **200** in the **FIG. 2B**). The outer jacket **204** includes a second outer jacket layer **206**, a first outer jacket layer **207** and a third outer jacket layer **208**. Also, the second outer jacket layer **206** surrounds the first outer jacket layer **207**. Accordingly, the first outer jacket layer **207** surrounds the third outer jacket layer **208** and the third outer jacket layer **208** surrounds the plurality of fiber units **203**. The second outer jacket layer **206** is made of thermoplastic polyurethane, the first outer jacket layer **207** is made of aramid yarns and the third outer jacket layer **208** is made of 85A polyether type thermoplastic polyurethane. In addition, a void **212** represents an unoccupied free space of the optical fiber cable **200** surrounded by the outer jacket **204**.

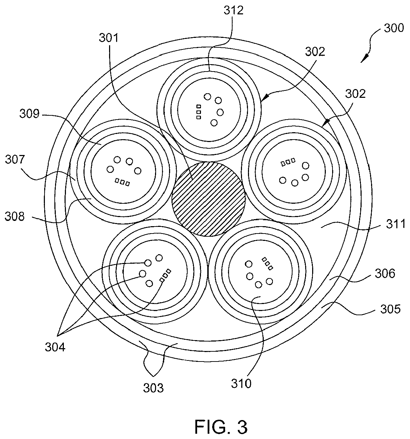

**FIG. 3** illustrates a cross-sectional view of an optical fiber cable **300**, in accordance with the invention. The optical fiber cable **300** includes a strength member **301**, a plurality of fiber units **302** and an outer jacket **303**. The strength member **301** is made of a composite material made of a polymer matrix. Further, each of the plurality of fiber units **302** includes one or more optical fibers **304**, a second covering layer **307**, a first covering layer **308** and a gel **309**. The first covering layer **308** is enclosed by the second covering layer **307**. The second covering layer **307** is made of a thermoplastic material and the first covering layer **308** is made of an acrylic material. Moreover, a coefficient of thermal expansion of the thermoplastic material is less than $2.0 \times 10^{-4}$ /°C. Going further, the gel **309** directly surrounds a void **310**. The outer jacket **303** includes a second outer jacket layer **305** and a first outer jacket layer **306**. The second outer jacket layer **305** surrounds the first outer jacket layer **306**. Accordingly, the first outer jacket layer **305** surrounds the plurality of fiber units **302**. The second outer jacket layer **305** is made of thermoplastic polyurethane and the first outer jacket layer **306** is made of aramid yarns. In addition, a void **311** represents an unoccupied free space of the optical fiber cable **300** surrounded by the outer jacket **303**.

In an embodiment, the gel 309 is a thixotropic gel layer. The thixotropic gel layer is a viscous fluid or gel under static conditions and flow when shaken or agitated.

The gel 309 directly surrounds a void 311 and the one or more optical fibers 304 within each of the plurality of fiber unit 302. In addition, the gel 309 prevents sticking of the one or more optical fibers 304 with an inner surface of the first covering layer 308.

In an embodiment, the thixotropic gel layer has sufficient viscosity to resist shear forces as a result of a weight of the one or more optical fibers 304. Accordingly, the gel 309 prevents stresses induced on the optical fibers 304 due to sticking with the inner surface of the first covering layer 308. Further, thickness of the gel 309 within each of the plurality of fiber units 302 is variable throughout since the gel 309 is a non-solid component or a semi-solid component.

Modifications to embodiments of the present disclosure described in the foregoing are possible without departing from the scope of the present invention as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

**Claims**

1.   An optical fiber cable (100,200,300) comprising:

   a strength member (102,202,301) substantially symmetrical along a longitudinal axis (101,201) of the optical fiber cable (100,200,300), wherein the strength member (102,202,301) is made of a composite material made of a polymer matrix and wherein the strength member (102,202,301) is centrally located;
   a plurality of fiber units (103,203,302) being laid around the strength member (102,202,301) in a helical pattern, wherein each of the plurality of fiber units (103,203,302) comprises:

      one or more optical fibers (105,205,304);
      a first covering layer (109,209,308); and
      a second covering layer (108,209,307), wherein the first covering layer (109,209,308) is enclosed by the second covering layer (108,209,307), wherein each of the one or more optical fibers (105,205,304) is enclosed by the first covering layer (109,209,308); and

      an outer jacket (104,204,303) surrounding the plurality of fiber units (103,203,302), wherein the outer jacket (104,204,303) further comprises:

      a second outer jacket layer (106,206,305); and
      a first outer jacket layer (107,207,306), wherein-the second covering layer (108,209,307) is made of a thermoplastic material and the first covering layer (109,209,308) is made of an acrylic material, a coefficient of thermal expansion of the thermoplastic material is less than $2.0\times10^{-4}$ /°C, the second outer jacket layer (106,206,305) is made of thermoplastic polyurethane and the first outer jacket layer (107,207,306) is made of aramid yarns and the second outer jacket layer (106,206,305) surrounds the first outer jacket layer (107,207,306); and

wherein the plurality of fiber units (103,203,302) further comprises a gel (309) and wherein the gel (309) enclosed by the first covering layer (109,209,308) encloses each of the one or more optical fibers (105,205,304).

2. The optical fiber cable (100,200,300) according to claim 1, **characterized in that** the thermoplastic material of the second covering layer (108,209,307) is selected from a group consisting of Polypropylene and Nylon.

3. The optical fiber cable (100,200,300) according to claim 1, **characterized in that** each of the plurality of fiber units (103,203,302) has a cylindrical cross section.

4. The optical fiber cable (100,200,300) as according to claim 1, **characterized in that** the second outer jacket layer (106,206,305) has a thickness in a range of 1.1 mm $\pm$ 0.2 mm and a diameter in a range of 7.4 mm $\pm$ 0.3 mm.

5. The optical fiber cable (100,200,300) according to claim 1, **characterized in that** the second covering layer (108,209,307) has a thickness in a range of 0.225 mm $\pm$ 0.05 mm and a diameter in a range of 1.8 mm $\pm$ 0.05 mm.

6. The optical fiber cable (100,200,300) according to claim 1, **characterized in that** the first covering layer (109,210,308) has a thickness in a range of 0.2 mm $\pm$ 0.05 mm.

7. The optical fiber cable (200) according to claim 1, **characterized in that** the outer jacket (204) further comprises a third outer jacket layer (208), and wherein the third outer jacket layer (208) is enclosed by the first outer jacket layer (207) and wherein the third outer jacket layer (208) encloses the plurality of fiber units (203).

8. The optical fiber cable (200) according to claim 7, **characterized in that** the third outer jacket layer (208) is made of 85A polyether type thermoplastic polyurethane and wherein the third outer jacket layer (208) has a thickness in a range of 0.4 mm $\pm$ 0.1 mm.

9. The optical fiber cable (300) according to claim 1, **characterized in that** the gel (309) is a thixotropic gel layer.

10. The optical fiber cable (100,200,300) according to claim 1, **characterized in that** the strength member (102,202,301) has a diameter in a range of 1.2 mm $\pm$ 0.05mm.

11. The optical fiber cable (100,200,300) according to claim 1, **characterized in that** each of the one or more optical fibers (105,205,304) is made of silica optical fiber with polymer coatings.

12. The optical fiber cable (100,200,300) according to claim 1, **characterized in that** the first covering layer (109,210,308) and the second covering layer (108,209,307) ensures better kink resistance.

13. The optical fiber cable (100,200,300) according to claim 1, **characterized in that** each of the plurality of fiber units (103,203,302) is similar in structure and dimensions.

14. The optical fiber cable (100,200,300) according to claim 1, **characterized in that** each of the plurality of fiber units (103,203,302) has a packing density greater than 90% and wherein each of the one or more optical fibers (105,205,304) has an outer diameter of less than 262 microns.

**Patentansprüche**

1. Lichtleiterkabel (100, 200, 300), das Folgendes aufweist:

- ein Verstärkungselement (102, 202, 301), das sich im Wesentlichen symmetrisch längs der Längsachse (101, 201) des Lichtleiterkabels (100, 200, 300) erstreckt, wobei das Verstärkungselement (102, 202, 301) aus einem Verbundmaterial besteht, das aus einer Polymermatrix aufgebaut ist, und wobei das Verstärkungselement (102, 202, 301) zentral angeordnet ist;
- - eine Vielzahl von Lichtleitereinheiten (103, 203, 302), die um das Verstärkungselement (102, 202, 301) in einem helixförmigen Muster herumgelegt sind, wobei jede von der Vielzahl von Lichtleitereinheiten (103, 203, 302) folgendes aufweist:
- einen oder mehrere Lichtleiter (105, 205, 304);
- eine erste Abdeckschicht (109, 209, 308); und
- eine zweite Abdeckschicht (108, 209, 307), wobei die erste Abdeckschicht (109, 209, 308) von der zweiten Abdeckschicht (108, 209, 307) umschlossen ist, wobei jeder von dem einen oder den mehreren Lichtleitern (105, 205, 304) von der ersten Abdeckschicht (109, 209, 308) umschlossen ist;

- einen Außenmantel (104, 204, 303), der die Vielzahl von Lichtleitereinheiten (103, 203, 302) umgibt, wobei der Außenmantel (104, 204, 303) ferner Folgendes aufweist:

- eine zweite Außenmantelschicht (106, 206, 305); und

- eine erste Außenmantelschicht (107, 207, 306),

wobei die zweite Abdeckschicht (108, 209, 307) aus einem thermoplastischen Material besteht und die erste Abdeckschicht (109, 209, 308) aus einem Acrylmaterial besteht, wobei der thermische Ausdehnungs-koeffizient des thermoplastischen Materials kleiner als $2{,}0 \times 10^{-4}/°C$ ist, wobei die zweite Außenmantelschicht (106, 206, 305) aus einem thermoplastischen Polyurethan besteht und die erste Außenmantelschicht (107, 207, 306) aus Aramidfäden besteht und wobei die zweite Außenmantelschicht (106, 206, 305) die erste Außenmantelschicht (107, 207, 306) umgibt; und

wobei die Vielzahl von Lichtleitereinheiten (103, 203, 302) ferner ein Gel (309) aufweist und wobei das Gel, das von der ersten Abdeckschicht (109, 209, 308) umgeben ist, jeden von dem einen oder den mehreren Lichtleitern (105, 205, 304) umschließt.

2. Lichtleiterkabel (100, 200, 300) nach Anspruch 1, **dadurch gekennzeichnet,** **dass** das thermoplastische Material der zweiten Abdeckschicht (108, 209, 307) aus einer Gruppe gewählt ist, die aus Polypropylen und Nylon besteht.

3. Lichtleiterkabel (100, 200, 300) nach Anspruch 1, **dadurch gekennzeichnet,** **dass** jede von der Vielzahl von Lichtleitereinheiten (103, 203, 302) einen zylindrischen Querschnitt besitzt.

4. Lichtleiterkabel (100, 200, 300) nach Anspruch 1, **dadurch gekennzeichnet,** **dass** die zweite Außenmantelschicht (106, 206, 305) eine Dicke in einem Bereich von 1,1 mm ± 0,2 mm sowie einen Durchmesser in einem Bereich von 7,4 mm ± 0,3 mm besitzt.

5. Lichtleiterkabel (100, 200, 300) nach Anspruch 1, **dadurch gekennzeichnet,** **dass** die zweite Abdeckschicht (108, 209, 307) eine Dicke in einem Bereich von 0,225 mm ± 0,05 mm und einen Durchmesser in einem Bereich von 1,8 mm ± 0,05 mm besitzt.

6. Lichtleiterkabel (100, 200, 300) nach Anspruch 1,

**dadurch gekennzeichnet,** **dass** die erste Abdeckschicht (109, 210, 308) eine Dicke im Bereich von 0,2 mm ± 0,05 mm besitzt.

7. Lichtleiterkabel (200) nach Anspruch 1, **dadurch gekennzeichnet,** **dass** der Außenmantel (204) ferner eine dritte Außenmantelschicht (208) aufweist, und wobei die dritte Außenmantelschicht (208) von der ersten Außenmantelschicht (207) umschlossen ist und wobei die dritte Außenmantelschicht (208) die Vielzahl von Lichtleitereinheiten (203) umschließt.

8. Lichtleiterkabel (200) nach Anspruch 7, **dadurch gekennzeichnet,** **dass** die dritte Außenmantelschicht (208) aus einem thermoplastischen Polyurethan von 85A-Polyethertyp besteht, und wobei die dritte Außenmantelschicht (208) eine Dicke im Bereich von 0,4 mm ± 0,1 mm besitzt.

9. Lichtleiterkabel (300) nach Anspruch 1, **dadurch gekennzeichnet,** **dass** das Gel (309) eine thixotrope Gelschicht ist.

10. Lichtleiterkabel (100, 200, 300) nach Anspruch 1, **dadurch gekennzeichnet,** **dass** das Verstärkungselement (102, 202, 301) einen Durchmesser in einem Bereich von 1,2 mm ± 0,05 mm besitzt.

11. Lichtleiterkabel (100, 200, 300) nach Anspruch 1, **dadurch gekennzeichnet,** **dass** jeder von dem einen oder den mehreren Lichtleitern (105, 205, 304) aus einem Siliziumdioxid-Lichtleiter mit Polymerbeschichtungen besteht.

12. Lichtleiterkabel (100, 200, 300) nach Anspruch 1, **dadurch gekennzeichnet,** **dass** die erste Abdeckschicht (109, 210, 308) und die zweite Abdeckschicht (108, 209, 307) eine bessere Knickwiderstandsfähigkeit gewährleisten.

13. Lichtleiterkabel (100, 200, 300) nach Anspruch 1, **dadurch gekennzeichnet,** **dass** jede von der Vielzahl von Lichtleitereinheiten (103, 203, 302) einen ähnlichen Aufbau hinsichtlich der Struktur und der Abmessungen besitzt.

14. Lichtleiterkabel (100, 200, 300) nach Anspruch 1, **dadurch gekennzeichnet,** **dass** jede von der Vielzahl von Lichtleitereinheiten (103, 203, 302) eine Packungsdichte von größer als 90 % besitzt, und wobei jeder von dem einen oder den mehreren Lichtleitern (105, 205, 304) einen Außendurchmesser von weniger als 262 μm besitzt.

**Revendications**

1. Câble de fibre optique (100, 200, 300) comprenant :

un organe de renfort (102, 202, 301) sensiblement symétrique le long d'un axe longitudinal (101, 201) du câble de fibre optique (100, 200, 300), selon lequel l'organe de renfort (102, 202, 301) est constitué d'un matériau composite constitué d'une matrice polymérique et selon lequel l'organe de renfort (102, 202, 301) se trouve en position centrale ;
une pluralité d'unités de fibres (103, 203, 302) étant disposée autour de l'organe de renfort (102, 202, 301) selon un motif hélicoïdal, selon lequel chacune de la pluralité d'unités de fibres (103, 203, 302) comprend :

une ou plusieurs fibres optiques (105, 205, 304) ;
une première couche de revêtement (109, 209, 308) ; et
une deuxième couche de revêtement (108, 209, 307),
selon lequel la première couche de revêtement (109, 209, 308) est enfermée par la deuxième couche de revêtement (108, 209, 307),
selon lequel chacune de l'une ou plusieurs fibres optiques (105, 205, 304) est enfermée par la première couche de revêtement (109, 209, 308) ; et

un gilet extérieur (104, 204, 303) entourant la pluralité d'unités de fibres (103, 203, 302), selon lequel le gilet extérieur (104, 204, 303) comprend en outre :

une deuxième couche de gilet extérieur (106, 206, 305) ; et
une première couche de gilet extérieur (107, 207, 306),
selon lequel la deuxième couche de revêtement (108, 209, 307) est constituée d'un matériau thermoplastique et la première couche de revêtement (109, 209, 308) est constituée d'un matériau acrylique, un coefficient d'expansion thermique du matériau thermoplastique étant inférieur à 2,0 x $10^{-4}$/°C, la deuxième couche de gilet extérieur (106, 206, 305) étant constituée de polyuréthanne thermoplastique et la première couche de gilet extérieur (107, 207, 306) est constituée de fils d'aramide et la deuxième couche de gilet extérieur (106, 206, 305) entoure la première couche de gilet extérieur (107, 207, 306) ; et

selon lequel la pluralité d'unités de fibres (103, 203, 302) comprend en outre un gel (309), et selon lequel le gel (309) enfermé par la première couche de revêtement (109, 209, 308) enferme chacune de la ou des fibres optiques (105, 205, 304).

2. Câble de fibre optique (100, 200, 300) selon la revendication 1, **caractérisé en ce que** le matériau thermoplastique de la deuxième couche de revêtement (108, 209, 307) est choisi dans le groupe consistant en le polypropylène et le nylon.

3. Câble de fibre optique (100, 200, 300) selon la revendication 1, **caractérisé en ce que** chacune de la pluralité d'unités de fibres (103, 203, 302) présente une section transversale cylindrique.

4. Câble de fibre optique (100, 200, 300) selon la revendication 1, **caractérisé en ce que** la deuxième couche de gilet extérieur (106, 206, 305) présente une épaisseur de 1,1 mm ±0,2 mm et un diamètre de 7,4 mm ±0,3 mm.

5. Câble de fibre optique (100, 200, 300) selon la revendication 1, **caractérisé en ce que** la deuxième couche de revêtement (108, 209, 307) présente une épaisseur de 0,225 mm ±0,05 mm et un diamètre de 1,8 mm ±0,05 mm.

6. Câble de fibre optique (100, 200, 300) selon la revendication 1, **caractérisé en ce que** la première couche de revêtement (109, 209, 308) présente une épaisseur de 0,2 mm ±0,05 mm.

7. Câble de fibre optique (200) selon la revendication 1, **caractérisé en ce que** le gilet extérieur (204) comprend en outre une troisième couche de gilet extérieur (208), et selon lequel la troisième couche de gilet extérieur (208) est enfermée par la première couche de gilet extérieur (207), et selon lequel la troisième couche de gilet extérieur (208) enferme la pluralité d'unités de fibres (203).

8. Câble de fibre optique (200) selon la revendication 7, **caractérisé en ce que** la troisième couche de gilet extérieur (208) est constituée de polyuréthanne thermoplastique de type polyéther 85A et selon lequel la troisième couche de gilet extérieur (208) présente une épaisseur de 0,4 mm ±0,1 mm.

9. Câble de fibre optique (300) selon la revendication 1, **caractérisé en ce que** le gel (309) est une couche de gel thixotrope.

10. Câble de fibre optique (300) selon la revendication 1, **caractérisé en ce que** l'organe de renfort (102, 202, 301) présente un diamètre de 1,2 mm ±0,05 mm.

**11.** Câble de fibre optique (300) selon la revendication 1, **caractérisé en ce que** chacune de la ou des fibres optiques (105, 205, 304) est constituée de fibre optique de silice avec des revêtements de polymère.

**12.** Câble de fibre optique (300) selon la revendication 1, **caractérisé en ce que** la première couche de revêtement (109, 210, 308) et la deuxième couche de revêtement (108, 209, 307) assurent une meilleur résistance à la déformation.

**13.** Câble de fibre optique (300) selon la revendication 1, **caractérisé en ce que** chacune de la pluralité d'unités de fibres (103, 203, 302) présente une structure et des dimensions semblables.

**14.** Câble de fibre optique (300) selon la revendication 1, **caractérisé en ce que** chacune de la pluralité d'unités de fibres (103, 203, 302) présente une densité de conditionnement supérieure à 90 % et selon lequel la ou les plusieurs fibres optiques (105, 205, 304) présente un diamètre extérieur inférieur à 262 microns.

FIG. 1A

FIG. 1B

FIG. 2A

FIG. 2B

EP 3 023 823 B1

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7382955 B
- US 20100158457 A
- US 20110293228 A
- US 20090087154 A
- JP 2014132741 A